# EUROPEAN PATENT APPLICATION

(11) **EP 2 737 802 A1**
(43) Date of publication of application: **04.06.2014**
(21) Application number: 12195034.9
(22) Date of filing: 30.11.2012
(51) Int. Cl.: A22C 18/00

(54) **A food processing system and a corresponding method for sorting, weighing, conveying, and marinating solid food products**

(71) Applicant: CABINPLANT INTERNATIONAL A/S, DK-5683 Haarby (DK)
(72) Inventor: Hansen, Henning Ingemann, 5220 Odense SØ (DK)
(74) Representative: Nielsen, Henrik Sten

(57) **Abstract**

The present invention relates to a food processing system for sorting, weighing, conveying and marinating solid food products. The food processing system comprises a weighing system (12) having a receiving section (14) for receiving solid food products in bulk and a discharge section (24) for selectively discharging a batch of solid food products. The food processing system further comprises a marinating receptacle (30) having an inlet for receiving the batch of solid food products. The food processing system further comprises a supply tube (36) for supplying an amount of marinade to the marinating receptacle and an agitator for agitating the batch of the solid food products and the amount of marinade. The food processing system has an outlet for discharging the batch of the solid food products together with the amount of marinade and a packing station (44) for packing the batch of the solid food products and the amount of marinade into a package.

## Description

The present invention relates to a food processing system and a corresponding method for sorting, weighing, conveying and marinating solid food products.

### Background

Marinating is a well known technique in which solid food products, such as pieces of beef, pork, chicken, fish etc, are soaked in a seasoned and acidic liquid, before being cooked. The liquid is generally known as a marinade. The marinade will typically be at least partially absorbed in the solid food product and this result in a juicier and more flavored end product. For private users, the marinating may be performed by storing the solid food product completely submerged in a marinade for some hours up to a few days. It is important that the complete outer surface of the food product is exposed to the marinade in order for the marinade to penetrate the solid food product evenly. One example of a marinating device for private users is described in US 2009/0169290 which describes a rotary tumbler which accelerate the "take up" of marinades into the meat fibers.

Marinating is also done industrially. It follows a few examples of prior art devices which are capable of marinating a large amount of solid food products: US 5,980,963 relates to a method and apparatus for pumping marinated products. The method teaches that the meat products are weighted before being marinated. US 2010/00149 relates to a vacuum transfer apparatus. A portioning hopper receives product from the vacuum chamber and dispenses a predetermined weight of product. US 6,242,025 relates to a method and apparatus for food marinating. The weight of the food to be marinated is determined within the marinating chamber. US 5,429,831 relates to a method of producing marinated meat and poultry products. The products are weighed in batch before marinating. US 2011/0105001 relates to an in-line batching of animal parts. An installation for processing slaughtered animal parts of slaughtered animals and forming batches each containing one or more slaughtered animal parts.

Typically, in the foodstuffs industry there is a need for sorting food products or articles at high speeds or throughputs according to various physical characteristics such as size, colour or weight, alternatively by any combination of these. Industrially packed food products, such as pieces or poultry, are often packed in packages of approximately equal weight, independent of the number of pieces included in the package. Therefore, many packages of food products include more than one individual product, i.e, the packages normally include at least two products. Some product packages, such as packages of chicken breast, typically include two or three pieces in each package, however, the number may be greater such as four or five pieces within the same package, as long as the packages all have approximately the same weight.

The general concept of sorting and weighing solid food products as such is known in the prior art. In the applicant's own international application WO 2006/092148 A1, a weighing arrangement is shown having a dosing mechanism for controlled conveying of product material portions from an infeed to a weighing system. The dosing mechanism comprises a motor-driven transport screw formed as a helically shaped rod positioned in an open trough for conveying the product material.

In the prior art, the solid food products are typically marinated in bulk and thereafter sorted, weighed and packaged. There is however a few problems associated with marinating the solid food products before the sorting and weighing of the product.

Marinades are typically somewhat sticky liquids. Thus, it is very difficult to separate and sort solid food products which have been marinated, since the marinade will cause the solid food products to stick together. The accuracy of the sorting and weighing system will thus suffer, and accordingly some of the packages will include a too large or too small amount of product material. There is thus a need for technologies for sorting the solid food products in a substantially dry condition before the solid food products have been marinated.

Further, another drawback of sorting and weighing the marinated solid food products after the solid food products have being marinated is the fact that the determined weight of the solid food product will be equal to the weight of the solid food product plus the weight of the marinade accompanying the solid food product. The customer will thus have to pay the same price for the marinade as for the solid food product. This may be considered unfair to some customers since the marinade may have a different price than the solid food product. It would thus be an advantage to be able to weight the solid food products before marinating in order to establish a more correct price for the final product.

It is thus an object according to the present invention to provide methods and systems which allow the solid food products to be marinated after being sorted and weighed. It is a particular feature according to the present invention that the techniques according to the present invention may be implemented into already existing weighing arrangements without any real modification of the arrangement itself.

It is a particular advantage according to the present invention that the weighing and sorting system does not contact the marinated solid food products. The weighing and sorting system thus remain free from marinade and may thus be kept relatively clean and hygienic.

### Summary of the invention

The above need, the above object, the above feature and the above advantage together with numerous other objects, advantages and features which will be evident from the below detailed description of the presently and preferred embodiments, are obtained according to the teachings of a first aspect of the present invention by a food processing system for sorting, weighing, conveying and marinating solid food products, the food processing system comprising
a weighing system having a receiving section for receiving solid food products in bulk and an discharge section for selectively discharging a batch of the solid food products,
a marinating receptacle comprising:
an inlet for selectively receiving the batch of the solid food products,
a supply tube for supplying an amount of a marinade to the marinating receptacle,
an agitator for agitating the batch of the solid food products and the amount of marinade within the marinating receptacle, and
an outlet for discharging the batch of the solid food products together with the amount of marinade,
   and,
a packing station for packing the batch of the solid food products and the amount of the marinade into an individual package.

The solid food products should be suitable for marinating, such as meat products. Sorting should in the present context be understood to mean dividing the bulk solid food products into individual pieces of solid food products or another appropriate amount of solid food products. Weighing is understood to include the determination of the weight of a particular batch or charge of solid food products. Conveying includes transportation of the solid food product in any horizontal or vertical direction. Marinating is the process in which a marinade is substantially uniformly applied onto the solid food product.

The receiving section of the weighing system receives the solid food products in bulk, i.e. a large quantity of unsorted and unpacked solid food products. The weighing system sorts and weighs the solid food products into individual charges or batches. The individual batches may have approximately the same weight or they may all have different weights. The typical weight of one batch of food products may range from some 10g up to several kg depending on the intended recipient. One charge will be packed into one package. The package is then brought to the customer, such as a supermarket, restaurant or similar point of sale. The charges are subsequently discharged from the weighing system into the marinating receptacle. The weights of the batches of food products may be stored in a digital memory in a control unit.

The marinating receptacle should be dimensioned to receive one batch of solid food products. The batch has already been weighed and there is thus no need for weighing the batch of solid food products again within the marinating receptale. A control system is used for keeping track of the weight of the batch of solid food products. The marinating receptacle is typically open upwards, forming an inlet in order to receive the batch of food products. The amount of marinade may be supplied into the marinating receptale via the supply tube before, subsequent with or after the introduction of the batch of solid food products. The supply tube may be connected to a canister or tank of marinade.

The agitator may be any device which interacts physically with the solid food products in order to apply the marinade substantially even over the surface of the batch of solid food products and to cause at least some of the marinade to enter the batch of solid food product. After a suitable amount of time within the marinating receptacle, the batch of solid food products and the amount of marinade is discharged via the outlet into a packing station.

The packing station provides a package for receiving the batch of solid food products and the amount of marinade which are both received directly into the package. In this way there is no need to convey or otherwise manipulate the marinated batch of solid food products and the downstream area of the marinating receptacle is left free from marinade in a hygienic way. All of the marinade may be included in the package such that the marinating process continues within the packages. The package may subsequently be evacuated and closed off.

According to a further embodiment, the food processing system comprises a first plurality of marinating receptacles. The process of weighing and packaging may typically be performed faster than the marinating process. The system may therefore include a plurality of marinating receptacles such that after the batch of solid food products has been released into the first marinating receptacle, further amounts of solid food products may be released into further marinating receptacles while the batch of solid food products are being marinated in the first marinating receptacles. In this way the weighing system will be more efficient since the weighing system must not wait unit the first marinating receptacle is finished before releasing a new batch of solid food products, but may release the new batch into another free marinating receptacles. The system should include a transport system in order to allow the weighing system to discharge batches of solid food product into the different receptacles.

According to a further embodiment, the first plurality of receptacles comprises 2-100 receptacles, preferably 3-10 receptacles, more preferably 4-6 receptacles such as 4 receptacles. The above numbers are suitable in order to achieve a quick and flexible system. In this way, the marinating process may take up to four times longer than the weighing process.

According to a further embodiment, the food processing system comprises a second plurality of bins located between the discharge section of the weighing system and the inlet of the marinating receptacle for temporarily storing the batch of the solid food products, the second plurality of bins preferably corresponding to the first plurality of receptacles. In order to allow the marinating receptacles to operate synchronously, the food processing system may include a number of bins for temporarily storing the batch of the solid food products. In this way, the weighing system may release a number of batches of solid food products not directly into the marinating receptacles but into a respective bin. During the time the second plurality of bins being filled, the marinating receptacle will marinate the preceding batches of solid food material. When the preceding batches of solid food products have been marinated and emptied into the respective packages, the bins are simultaneously emptied into the inlet of the respective marinating receptacles. The second plurality should be determined by the required marinating time such that the longer time the marinating process requires, the more bins are provided. The number of marinating receptacles should preferably correspond to the number of bins such that the bins may be synchronously emptied into the marinating receptacles which may operate synchronously.

According to a further embodiment, the weight of said batch ranges between 10g and 10kg, preferably between 100g and 5kg, more preferably between 200g and 2kg, such as between 10g and 100g, 100g and 500g, 500g and 1kg, 1kg and 2kg, 2kg and 5kg, 5kg and 10kg. The weight of the batch of solid food products should preferably correspond to at least one portion of the solid food product. Very large packages over 10kg should be avoided since such packages are difficult to handle. Normal "family" sizes are typically about 1kg.

According to a further embodiment, the processing system comprises a control unit for controlling the weighing system and the marinating receptacles. A control unit may be used for controlling the operation of the system, e.g. the weighing system and the marinating receptacles. The control system may e.g. control the discharge and the agitation of the solid food products. The control system may also include a digital memory for storing the weight of the batch of solid food product and the amount of marinade injected into the marinating receptacle.

According to a further embodiment, the solid food products comprises meat products, such a pieces of poultry, beef, fish or pork. Suitable meat products to be marinated include poultry, beef, fish and pork. The taste and the overall culinary experience of such meat product will benefit from the marinating.

According to a further embodiment, the marinating receptacle comprises a rotating drum. The marinating receptacle may be a rotating drum. The agitator may then comprise fins or bars on the inside of the rotating drum for interacting with the solid food products.

According to a further embodiment, the amount of marinade corresponds to the batch of the solid food products. Since the weight of the batch of solid food products is known from the weighing system, the amount of marinade required to marinate the batch of food products may be derived from standard recipes. The weight of the amount of marinade may be derived as well and stored in a digital memory together with the weight of the batch of solid food products.

According to a further embodiment, the marinating receptacle comprises a rounded bottom. In order to allow the batch of solid food products to move inside the marinating receptale without generating too much friction which may deteriorate the batch of solid food products, the bottom of the marinating receptacle may be rounded. Further, the marinating receptacle may be made of metal, such as stainless steel, in order to be easily cleaned.

According to a further embodiment, the agitator comprises one or more rotating stirring bars for interacting with the batch of the solid food products. The stirring bars may rotate relative to each other in order to move the batch of solid food products within the receptacle for allowing the batch of solid food products to be covered with marinade and to cause the marinade to at least partially enter the batch of solid food products.

According to a further embodiment, the agitator may be retracted from the marinating receptacle. The outlet of the marinating receptacle may comprise an opening located at the bottom of the receptacle. The outlet may normally be covered by a door or shutter which opens for discharging the batch of solid food products by gravity. In order to prevent any solid food products from remaining within the marinating receptacle fastened onto the agitator or squeezed between the agitator and the inner wall of the marinating receptacle, the agitator may be retracted from the marinating receptacle before the shutter opens to release the batch of solid food products.

According to a further embodiment, the packing station is arranged for applying a label onto the package, the label preferably indicating the weight of the batch of the solid food products as determined by the weighing system and/or the weight of the amount of marinade and/or the total weight of the batch of the solid food products and the amount of the marinade.

In order to inform the customer of the weight of the product, the packing station may be arranged to apply a label onto the package. The respective weight of the batch of the solid food products and the weight and/or volume of the amount of marinade may be derived via the respective weighing system and supply tube (e.g. a flow meter inside the supply tube). In this way the package may be labeled with both the weight of the solid food product and the weight of the marinade. It is evident that the total weight of the product may be derived by adding the weights of the solid food product and the marinade. The customer thus has complete information of how much the "dry weight" of the product is, and the total price of the product may be established in a more competitive way by assigning a higher price by kg for the solid food product and a lower price for the marinade, or vice versa.

According to a further embodiment, the weighing system constitutes a multihead weigher. In order to ensure that solid food products of varying weight may be combined in packages having approximately the same weight, a multihead weigher may be used. The principle of a multihead weigher is known in the prior art. Individual pieces of food products are randomly distributed among a large number of weighing systems, such as 5-50, preferably 8-20. The weighing system typically has the form of receptacles. A computer is then used to calculate the most favorable combination of receptacles to reach a target weight, and the chosen receptacles are subsequently emptied such that the food products contained in the receptacle leave the receptacle and end up in a common package. It is thereby a need to keep the weight of the products contained within each receptacle as low as possible such that a large number of combinations is feasible.

The above need, the above object, the above feature and the above advantage together with numerous other objects, advantages and features which will be evident from the below detailed description of the presently and preferred embodiments, are obtained according to the teachings of a second aspect of the present invention by a method of weighing, conveying and marinating solid food products, the method comprising providing a food processing system, the food processing system comprising:
a weighing system having a receiving section and a discharge section,
a marinating receptacles comprising an inlet, a supply tube, an agitator, and an outlet, and
a packing station,
the method comprising the steps of:
receiving solid food products in bulk at the receiving section of the weighing system,
selectively discharging at the discharge section of the weighing system a batch of the solid food products into the inlet of the marinating receptacle,
supplying an amount of marinade into each of the receptacles using the supply tubes,
agitating the batch of the solid food products and the amount of marinade within the marinating receptacle using the agitator, and
discharging the batch of the solid food products together with the amount of marinade via the outlet into an individual package supplied by the packing station.

It is contemplated by the skilled person that all of the embodiments according to the first aspect of the present invention is equally applicable to the second aspect of the present invention. The method according to the second aspect may thus further comprise any of the features of the system according to the first aspect.

### Brief description of the drawings

Fig 1 illustrates a food processing system according to a first embodiment of the present invention.
Fig 2 illustrates the receipt of a solid food product into the bins of the food processing system according the present invention.
Fig 3 illustrates the receipt of a solid food product into the marinating receptacle of the food processing system according the present invention.
Fig 4 illustrates the marinating process of a solid food product within the marinating receptacle of the food processing system according the present invention.
Fig 5 illustrates the retraction of the agitator of the food processing system according the present invention.
Fig 6 illustrates the discharge of the marinated solid food products into the packing station of the food processing system according the present invention.
Fig 7 illustrates a food processing system according to an alternative embodiment of the present invention.

### Detailed description of the drawings

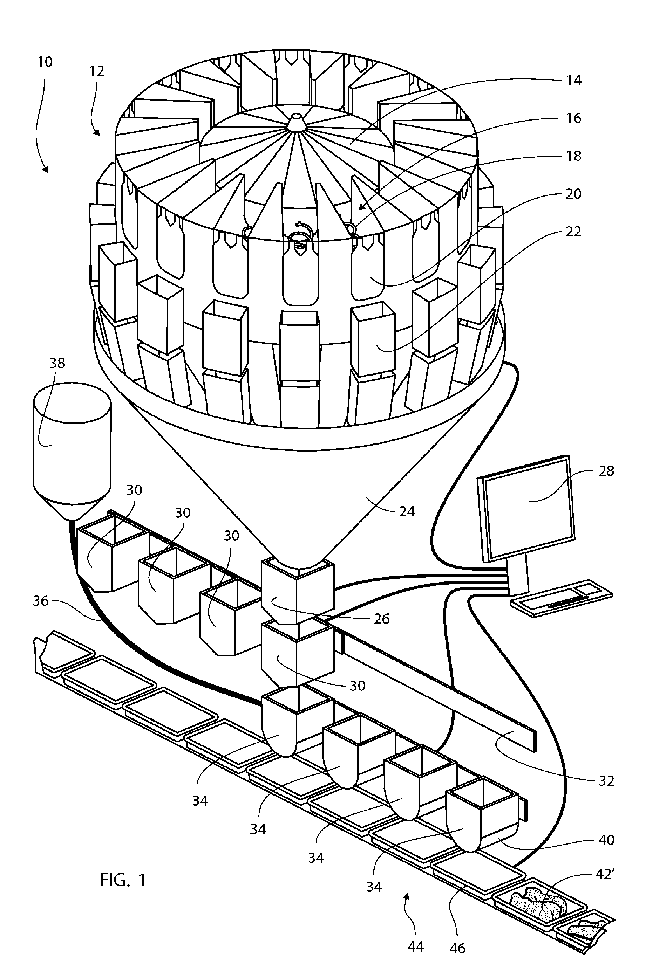

Fig 1 shows a perspective view of a food processing system 10 according to the present invention. The food processing system 10 comprises a multihead weigher 12. The multihead weigher 12 comprises a receiving section 14 for receiving solid food products (not shown) in bulk, i.e. the solid food products comprise a large amount of individual food products, typically meat products such as chicken, beef, pork, fish etc. The solid food products are conveyed from the receiving section 14 into one of the trays 16. The trays 16 are located circumferentially around the receiving section 14. Each tray 16 comprises a transport screw 18 for conveying the solid food products outwardly towards a lid 20. The lid 20 controls the release of the solid food products from the tray 16 into a weighing scale 22. The weighing scale 22 determines the weight of the solid food products located in the weighing scale 22. The solid food products may selectively be rereleased into a chute 24 and collected in a dosing mechanism 26.

The operation of the food processing system 10 is controlled by a control unit 28. The control unit 28 combines the above determined weight with the weight of the solid food products in the different weighing scales 28 in order to find the combination which matches a predetermined target weight. The contents of the weighing scales 22 which together best match the predetermined target weight form a charge or batch of solid food products and are released into the chute 26 and dosing mechanism 26. The control unit 28 include a digital memory for storing the weight of the batch of solid food products resting in the dosing mechanism.

The batch or charge of solid food products resting in the dosing mechanism 26 is subsequently dropped into one of the bins 30. The bins 30 are used for temporarily storing subsequent batches of solid food products during marinating of the preceding batches of solid food products. The bins 30 are movable by means of a transport mechanism 32. In the present embodiment, four bins 30 are used such that up to four charges of solid food product may be stored. Below the bins 30, four marinating receptacles 34 are located. The solid food products are discharged from the bins 30 into the marinating receptacles 34 together with a volume or amount of marinade (not shown).

The marinade is supplied into the marinating receptacle via a supply tube 36 communicating with a tank 38. The amount of marinade may be standardized for all batches or the amount may be derived from a recipe and vary according to the weight of the batch of solid food products. The marinating receptacles 34 perform the marinating of the solid food products. The details of the marinating will be further discussed below. The marinating receptacles comprise a shutter 40 for releasing the marinated solid food products 42' from the marinating receptacles 34 into a packaging station 44.

In the packaging station 44 the marinated solid food products 42' are introduced into packages 46. The marinating receptacles 34 and the packaging station 44 are both controlled by the control unit 28. The packaging station 44 preferably includes a labeling station (not shown) which applies a label including the weight of the batch of solid food products and/or the weight of the amount of marinade and/or the total weight of the batch of solid food products and the amount of marinade. The bins 30 and marinating receptales 34, which come into contact with the solid food products, are typically made of metal such as steel. The packages may be made of plastic and may be evacuated before being sealed.

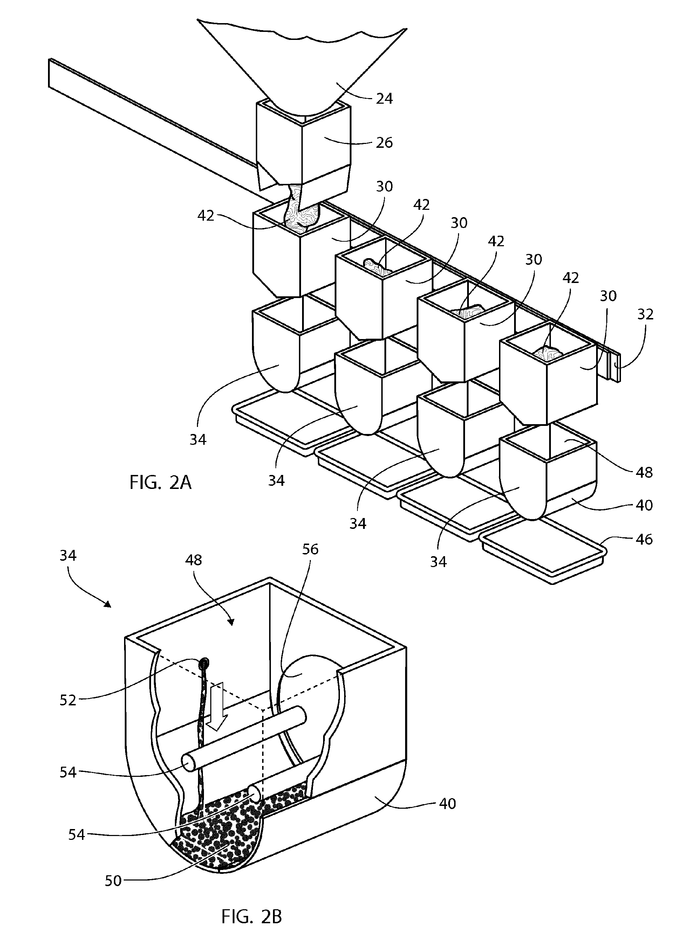

Fig 2A shows a perspective view of the lower part of the food processing system 10. In the first step of marinating the solid food products 42, the bins 30 are in the rightmost position such that each bin 30 is located above one corresponding marinating receptacle 34. One batch of the solid food products 42 has been released into each of the bins 30 from the dosing mechanism 26 as will be explained further below. As stated above, the bins 30 are movable in a horizontal direction by means of a transport mechanism 32 such that all four of the bins 30 may be filled subsequently.

The number of bins 30 corresponds to the number of marinating receptacles 34 such that when a batch of solid food products 42 has been introduced into the last bin 30 all bins 30 include one batch of solid food products and the bins 30 will be arranged above one corresponding marinating receptacle 34. Each marinating receptacle 34 has an upwardly open inlet 48 for receiving a charge of solid food products 42.

Fig 2B shows an interior perspective view of a marinating receptacle 34. At the same time as the solid food products are collected in the bins 30, an amount of marinade 50 is introduced via a nozzle 52 into the marinating receptacle 34 as shown by the arrow.

The nozzle 52 communicates with the supply tube 36 as described above. The amount of marinade 50 should be corresponding to the batch of solid food products which is stored in the bin 30 located immediately above the specific marinating receptacle 34, i.e. the bin 30 including the solid food products which is intended for the specific marinating receptacle 34.

The marinating receptale 34 further includes a set of two cylindrical bars 54 which may rotate about each other following a circular cover 56 of the marinating receptacle 34. It should be noted that the marinade may also be supplied together with or immediately after the solid food products has entered the marinating receptacle 34. The bottom of the marinating receptacle 34 comprises a shutter 40 which in the present stage is closed in order to allow the marinade 50 to remain in the marinating receptale 34

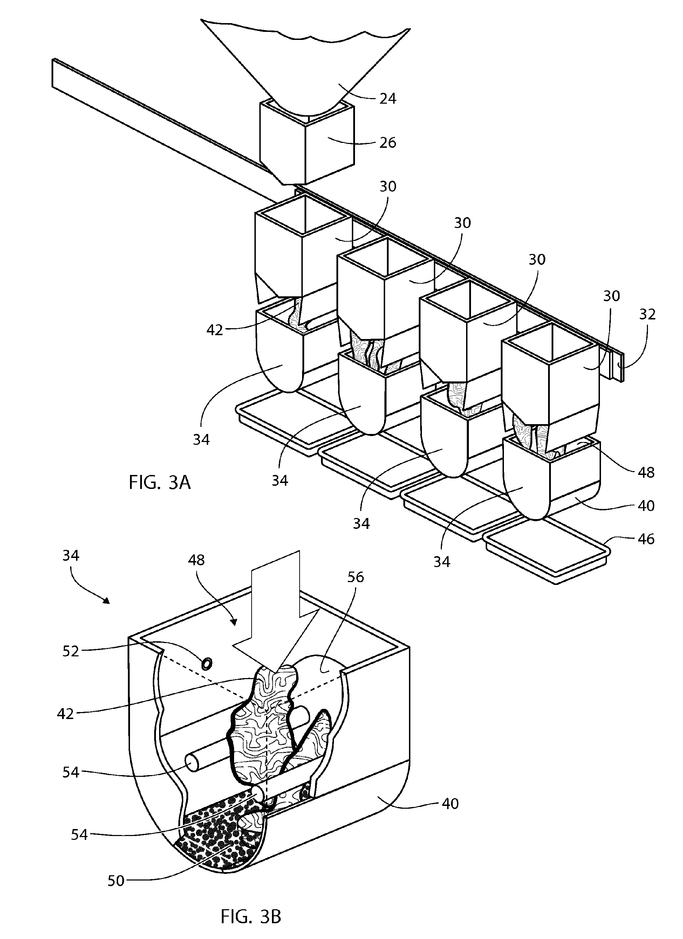

Fig 3A shows a perspective view of the lower part of the food processing system 10. In the second step of marinating the solid food products 42, all four of the batches of the solid food products 42 are released simultaneously from the bins 30 into a corresponding marinating receptacle 34 via the corresponding inlet 48. The bins 30 have doors in the bottom for this purpose. The bins 34 should be located adjacent the marinating receptacles 34 in order to allow the solid food products to fall a small distance only.

Fig 3B shows an interior perspective view of a marinating receptacle 34. The solid food products 42 will be stored at the bottom of the marinating receptacle 34 and will be at least partially submerged in marinade 50.

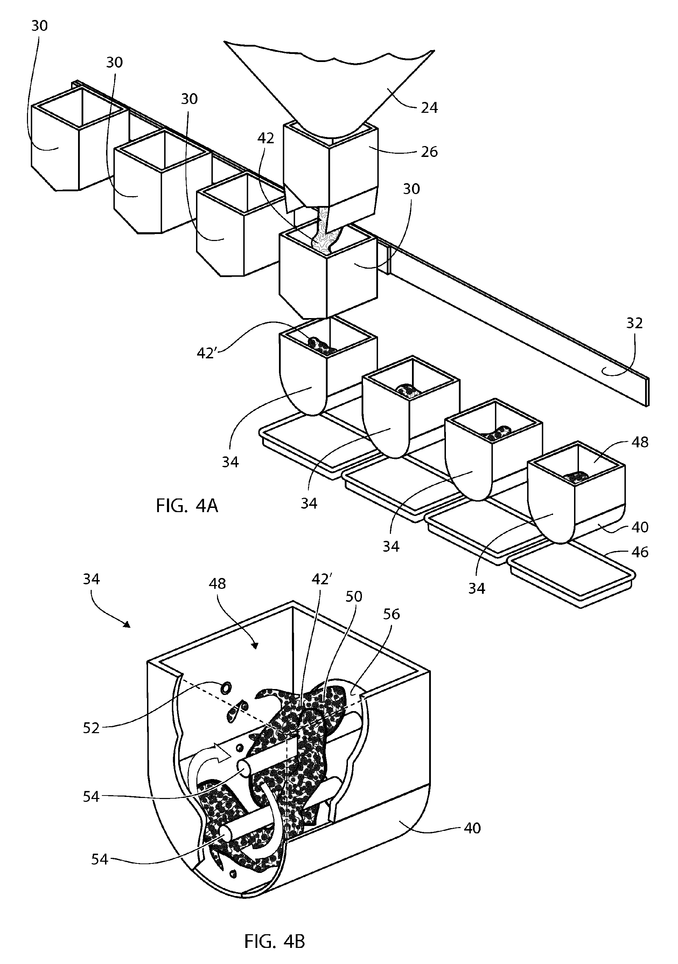

Fig 4A shows a perspective view of the lower part of the food processing system 10. In the third step of marinating the solid food products 42, all of the batches of the solid food products 42 are located in a corresponding marinating receptacle 34. The bins 30 are returned to the initial leftmost position in the figure by means of the transport mechanism 32 and the dosing mechanism 26 is used for introducing a new batch of solid food products 42 into the first bin 34. At the same time the batches of solid food products 42 located within the marinating receptacles 34 are being marinated.

Fig 4B shows an interior perspective view of a marinating receptacle 34. In order to marinate the batch of solid food products 42 within the marinating receptacle 34, the bars 54 are rotated about each other along the cover 56 as shown by the arrows in order to stir the marinade 50 and to agitate the solid food products 42 by kneading etc. In this way the marinade 50 will be substantially uniformly applied onto the solid food product 42 and some marinade 50 will enter the solid food product 42. The shutter 40 preferably forms a rounded bottom in order to reduce friction.

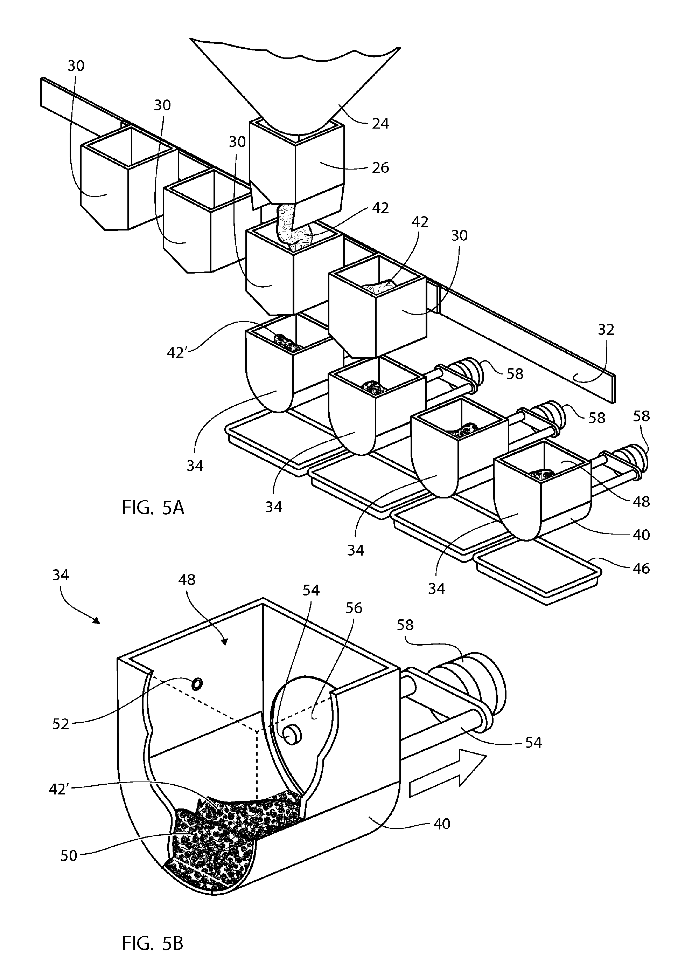

Fig 5A shows a perspective view of the lower part of the food processing system 10'. In the fourth step of marinating the solid food products 42, all of the charges of the solid food products 42' remain in the corresponding marinating receptacle 34. The bins 30 are moved stepwise in the right direction of the figure by transport mechanism 32 and the dosing mechanism 26 continuously introduces a new batch of solid food products 42' into each subsequent bin 34.

Fig 5B shows an interior perspective view of a marinating receptacle 34. When in the fourth step the marinating of the solid food products 42 is deemed to be finished, the bars 54 are retracted from each of the marinating receptacles 34 by means of an actuator 58 in order to prepare the marinating receptacle 34 for releasing the marinated solid food products 42' together with the marinade 50. The interfaces between the bars 54 and the cover 56 and between the cover 6 and the wall of the receptacle 34 should be substantially liquid tight. The marinated solid food products 42' together with the marinade 50 rest at the closed shutter 40 of the marinating receptacle 34.

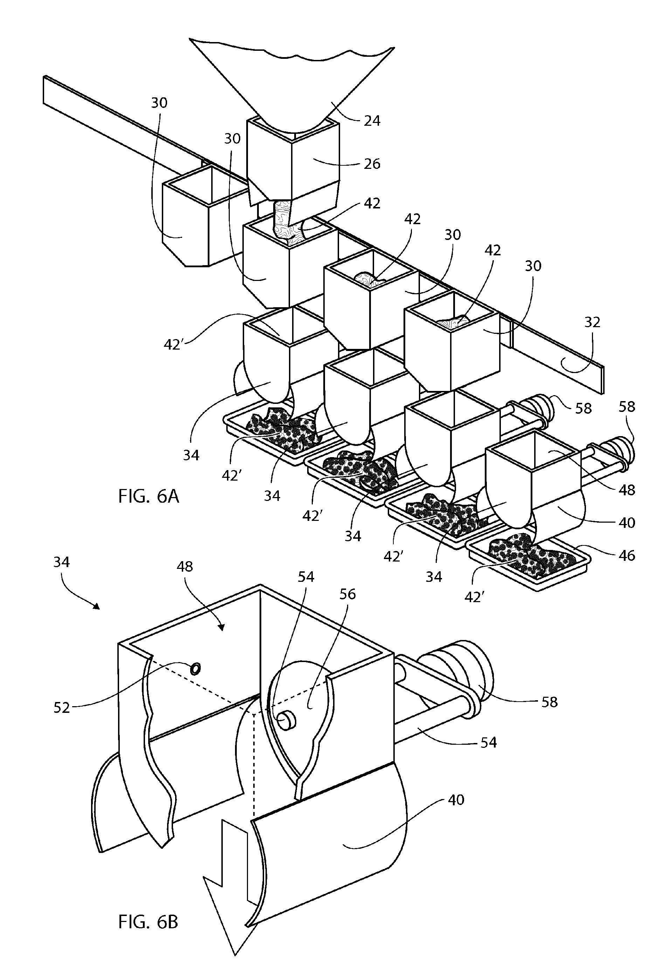

Fig 6A shows a perspective view of the lower part of the food processing system 10. The food processing system 10' is in the final step of the marinating of the solid food products 42 and the bins 30 have almost returned to the final position in which each bin 30 is located above a respective marinating receptacle 34. The shutters 40 of each of the marinating receptacles. 34 are opened in order to simultaneously release the marinated solid food products 42 together with all of the marinade 50 into the package 46.

Fig 6B shows an interior perspective view of a marinating receptacle 34. The shutter 40 of the marinating assembly preferably comprises two lids which open downwardly by means of pneumatic power. When the marinated solid food products 42 together with the excessive marinade 50 have been released into the package 46, the shutter is again closed liquid tight in order for the receptacle to be able to receive a new batch of solid food products and an amount of marinade. Subsequently, the bars 54 are returned into the marinating receptacle 34 by means of the actuator 58.

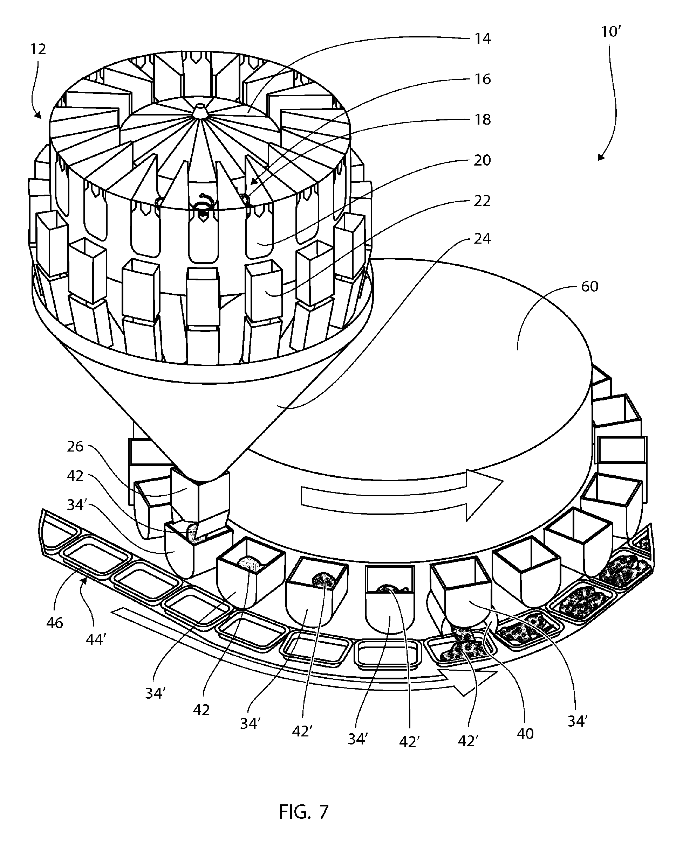

Fig 7 shows an alternative embodiment of a food processing system 10'. The alternative embodiment includes a multihead weigher 12 as described above. However, the bins are omitted. The marinating receptacles 34' are instead mounted on a rotating table 60. The marinating receptacles. 34' are rotated about the rotating table 60 according to the arrow. The empty marinating receptacles 34' emerging from the right hand side of the rotating table are filled by marinade via a supply tube within the rotating table 60. The bars (nor shown) have been introduced into the marinating receptacle 34', similar to the previous embodiment.

Subsequently, the dosing mechanism 28 releases one batch of solid food products 42 into the one marinating receptacle 34' located immediately below the dosing mechanism 28. The batch of solid food products 42 within the marinating receptacle 34' is agitated by means of the bars while the marinating receptacle 34' rotates stepwise about the rotating table 60'. When the marinating is deemed to be finished, the shutter 40 of the marinating receptacle 34' is opened allowing the charge of marinated solid food product to leave the marinating receptacle 34' and enter a packing station 44'. The shutter 40 is thereafter closed again. The packing station 44' is located below the marinating receptacle 34'. In the packing station, the marinated solid food products 42' are introduced into packages 46, similar to the previous embodiment.

Although the present invention has been described above with reference to specific embodiments of the food processing system, it is of course to be contemplated that numerous modifications may be deduced by a person having ordinary skill in the art and such modifications readily perceivable by a person having ordinary skill in the art is consequently to be construed part of the present invention as defined in the appending claims.

**List of parts**

| | |
|---|---|
| 10. | Food processing system |
| 12. | Multihead weigher |
| 14. | Receiving section |
| 16. | Tray |
| 18. | Transport screw |
| 20. | Lid |
| 22. | Weighing scale |
| 24. | Chute |
| 26. | Dosing mechanism |
| 28. | Control unit |
| 30. | Bins |
| 32. | Transport mechanism |
| 34. | Marinating receptacle |
| 36. | Supply tube |
| 38. | Tank |
| 40. | Shutter |
| 42. | Solid food product |
| 44. | Packing station |
| 46. | Package |
| 48. | Inlet |
| 50. | Marinade |
| 52. | Nozzle |
| 54. | Bars |
| 56. | Cover |
| 58. | Actuator |
| 60. | Rotating table |

## Claims

1. A food processing system for sorting, weighing, conveying and marinating solid food products, said food processing system comprising
a weighing system having a receiving section for receiving solid food products in bulk and an discharge section for selectively discharging a batch of said solid food products,
a marinating receptacle comprising:
an inlet for selectively receiving said batch of said solid food products,
a supply tube for supplying an amount of a marinade to said marinating receptacle,
an agitator for agitating said batch of said solid food products and said amount of marinade within said marinating receptacle, and
an outlet for discharging said batch of said solid food products together with said amount of marinade,
and,
a packing station for packing said batch of said solid food products and said amount of said marinade into an individual package.

2. The food processing system according to claim 1, wherein said food processing system comprises a first plurality of marinating receptacles.

3. The system according to claim 2, wherein said first plurality of receptacles comprises 2-100 receptacles, preferably 3-10 receptacles, more preferably 4-6 receptacles such as 4 receptacles.

4. The food processing system according to any of the claims 2 or 3, wherein said food processing system comprises a second plurality of bins located between said discharge section of said weighing system and said inlet of said marinating receptacle for temporarily storing said batch of said solid food products, said second plurality of bins preferably corresponding to said first plurality of receptacles.

5. The system according to any of the preceding claims, wherein the weight of said batch ranges between 10g and 10kg, preferably between 100g and 5kg, more preferably between 200g and 2kg, such as between 10g and 100g, 100g and 500g, 500g and 1kg, 1kg and 2kg, 2kg and 5kg, 5kg and 10kg.

6. The food processing system according to any of the preceding claims, wherein said processing system comprises a control unit for controlling said weighing system and said marinating receptacles.

7. The food processing system according to any of the preceding claims, wherein said solid food products comprises meat products, such a pieces of poulty, beef, fish or pork.

8. The food processing system according to any of the preceding claims, wherein said marinating receptacle comprises a rotating drum.

9. The food processing system according to any of the preceding claims, wherein said amount of marinade corresponds to said batch of said solid food products.

10. The food processing system according to any of the preceding claims, wherein said marinating receptacle comprises a rounded bottom.

11. The food processing system according to any of the preceding claims, wherein said agitator comprises one or more rotating stirring bars for interacting with said batch of said solid food products.

12. The food processing system according to any of the preceding claims, wherein said agitator may be retracted from said marinating receptacle.

13. The system according to any of the preceding claims, wherein said packing station is arranged for applying a label onto said package, said label preferably indicating the weight of said batch of said solid food products as determined by said weighing system and/or the weight of said amount of marinade and/or the total weight of said batch of said solid food products and said amount of said marinade.

14. The system according to any of the preceding claims, wherein said weighing system constitutes a multihead weigher.

15. A method of weighing, conveying and marinating solid food products, said method comprising providing a food processing system, said food processing system comprising:
a weighing system having a receiving section and a discharge section,
a marinating receptacles comprising an inlet, a supply tube, an agitator,
and an outlet, and
a packing station,
said method comprising the steps of:
receiving solid food products in bulk at said receiving section of said weighing system,
selectively discharging at said discharge section of said weighing system a batch of said solid food products into said inlet of said marinating receptacle,
supplying an amount of marinade into each of said receptacles using said supply tubes,
agitating said batch of said solid food products and said amount of marinade within said marinating receptacle using said agitator, and
discharging said batch of said solid food products together with said amount of marinade via said outlet into an individual package supplied by said packing station.
